# FASCICULE DE BREVET EUROPEEN

(11) **EP 0 490 746 B1**
(45) Date de publication et mention de la délivrance du brevet: **17.04.1996**
(21) Numéro de dépôt: 91403319.6
(22) Date de dépôt: 09.12.1991
(51) Int. Cl.: B25B 11/00

(54) **Procédé et dispositif pour conformer et maintenir des pièces minces, de grandes dimensions, à un profil théorique prédéterminé**
Verfahren und Vorrichtung zum Formen und Halten dünner Werkstücke grosser Abmessungen an einem vorbestimmten theoretischen Profil
Process and apparatus for shaping and clamping thin workpieces of large dimensions in a predetermined calculated profile

(30) Priorité: 11.12.1990 FR 9015494
(43) Date de publication de la demande: 17.06.1992
(73) Titulaire: AEROSPATIALE Société Nationale Industrielle, F-75781 Paris Cédex 16 (FR)
(72) Inventeur: Bon, Gérard Raymond, F-48860 Pont Saint Martin (FR)
(74) Mandataire: Bonnetat, Christian

(56) Documents cités:
- EP-A- 0 069 230
- EP-A- 0 179 957
- GB-A- 2 205 258
- US-A- 3 804 397
- US-A- 4 684 113
- US-A- 4 723 766

## Description

La présente invention concerne un procédé et un dispositif pour conformer et maintenir des pièces minces, de grandes dimensions, à un profil théorique prédéterminé, pour effectuer sur celles-ci notamment des opérations d'usinage et/ou divers traitements spécifiques.

Quoique non exclusivement, de telles pièces minces, dont les surfaces sont généralement courbes, sont particulièrement utilisées dans le domaine aéronautique pour constituer, après assemblage, le fuselage ou la voilure des aéronefs.

Généralement, ces pièces minces sont obtenues préalablement par emboutissage et, du fait de leur grande dimension comparée à leur épaisseur, il est nécessaire de les maintenir par la suite sur des dispositifs appropriés pour y effectuer les opérations d'usinage et/ou les traitements ultérieurs.

Pour cela, les dispositifs connus, actuellement en service, comprennent une pluralité de supports équipés respectivement, à une de leurs extrémités, de têtes de préhension orientables sur lesquelles vient s'appuyer la pièce mince. Ces têtes de préhension sont généralement du type à dépression, de sorte que, lorsqu'un vide partiel est créé dans chacune des têtes, la pièce mince est fermement maintenue en position. Les supports du dispositif sont répartis de façon appropriée pour soutenir convenablement la pièce mince et ils sont réglés initialement au profil théorique de la pièce mince pour que le contact s'établisse en tout point entre celle-ci et l'ensemble des têtes de préhension.

Or, il arrive bien souvent que le profil réel des pièces minces, obtenu après emboutissage, soit quelque peu différent du profil théorique prédéterminé, à cause principalement des défauts de fabrication qui apparaissent fréquemment sur des pièces de grandes dimensions. Ainsi, lorsqu'une telle pièce mince de surface courbe est transférée vers le dispositif, celle-ci ne vient pas au contact de l'ensemble des têtes de préhension desdits supports, puisque son profil réel ne correspond pas au profil théorique, donné par les supports.

Pour pallier cet inconvénient, un opérateur doit alors agir manuellement sur les zones concernées de la pièce pour établir la liaison avec les têtes de préhension correspondantes.

Toutefois, cette opération est longue et fastidieuse et elle ne peut être de plus pratiquée qu'en périphérie de la pièce mince puisque les têtes de préhension centrales du dispositif sont généralement inaccessibles. Par ailleurs, cette solution manuelle, donnant des résultats imparfaits, ne peut être envisagée dans un cycle automatique de de fabrication, ce qui pénalise ainsi la production.

On remarquera que le document GB-A-2 205 258 décrit un procédé et un appareil selon le préambule de la revendication 2 pour supporter et maintenir en position une pièce mince à surface courbe comprenant, entre chaque support réglable et une tête de préhension orientable à dépression, des moyens de déplacement du type à pistons. Après avoir procédé usuellement à un réglage approximatif des supports réglables, ces moyens de déplacement sont actionnés pour permettre de régler de façon précise, et par l'intermédiaire du porte-outil de la machine et d'un ordinateur, la position des membranes de caoutchouc desdites têtes de préhension, qui définissent alors un ensemble de points correspondant ainsi au profil théorique prédéterminé de la pièce mince.

Dans ce document antérieur, les moyens de déplacement prévus entre les supports réglables et les têtes de préhension dudit appareil ne permettent donc pas d'amener une pièce mince à surface courbe contre l'ensemble desdites têtes, définissant le profil théorique de la pièce, si son profil réel est différent.

La présente invention a pour objet de remédier à ces inconvénients et concerne un procédé et un dispositif pour conformer et maintenir des pièces minces de grandes dimensions à un profil théorique prédéterminé, quel que soit le profil réel desdites pièces. La conception du dispositif de l'invention est mécaniquement simple, peu coûteuse, et permet de plus d'automatiser le cycle de fabrication.

A cette fin, selon la présente invention, le procédé pour conformer et maintenir des pièces minces, de grandes dimensions, à un profil théorique prédéterminé, du type dans lequel on utilise une pluralité de supports réglables équipés respectivement, à une de leurs extrémités, de têtes de préhension orientables et des moyens de déplacement prévus entre chaque tête de préhension et son support, consiste à :
- régler lesdits supports pour amener lesdites têtes de préhension au profil théorique prédéterminé, alors que lesdits moyens de déplacement occupent une position rentrée ;
- commander lesdits moyens de déplacement jusqu'à une position sortie, translatant ainsi ledit profil théorique ;
- disposer ladite pièce mince sur lesdites têtes de préhension avec certaines desquelles ladite pièce entre en contact ;
- agir sur lesdits moyens de déplacement pour permettre à toutes lesdites têtes de préhension d'être au contact de ladite pièce, en épousant son profil réel ;
- maintenir ladite pièce contre les têtes de préhension ; puis,
- abaisser lesdits moyens de déplacement jusqu'à leur position rentrée, pour conformer et amener ladite pièce mince de son profil réel au profil théorique prédéterminé correspondant à la position rentrée desdits moyens de déplacement.

Pour la mise en oeuvre de ce procédé, le dispositif conforme à la présente invention, du type comportant une pluralité de supports réglables équipés respectivement, à une de leurs extrémités, de têtes de préhension orientables du type à dépression, contre lesquelles est susceptible de s'appliquer ladite pièce mince, et des moyens de déplacement portant chacune desdites têtes de préhension et liés respectivement auxdits supports, lesdits moyens de déplacement étant commandables et étant chacun constitués par un vérin à cylindre et piston, est caractérisé en ce que :
- lesdits moyens de déplacement sont susceptibles de se déplacer entre deux positions, respectivement rentrée et sortie, dont la course correspond aux écarts dimensionnels admissibles susceptibles d'apparaître entre le profil réel de ladite pièce mince et le profil théorique prédéterminé, ce dernier étant défini lorsque lesdits moyens de déplacement commandables occupent la position rentrée ;
- un ressort de compression est prévu entre ledit cylindre et le piston de chaque vérin ; et
- le tarage de chaque ressort est tel qu'il s'oppose, dans la position sortie desdits moyens de déplacement, juste au poids du piston et de la tête de préhension qui lui est associée.

Ainsi, grâce aux moyens de déplacement commandables prévus entre chaque support et la tête de préhension, le dispositif selon l'invention s'affranchit des interventions manuelles pour conformer le profil réel des pièces minces à leur profil théorique prédéterminé. Les supports sont initialement réglés pour que les têtes de préhension définissent le profil théorique prédéterminé lorsque les moyens de déplacement sont dans une position extrême rentrée.

Selon une autre caractéristique du dispositif, lesdits vérins, disposés entre lesdits supports réglables et les têtes de préhension, sont du type fluidique et sont reliés, par l'intermédiaire de conduites respectives, à une source fluidique commune, et chacune des têtes de préhension est reliée, par l'intermédiaire d'une conduite, à ladite source fluidique.

Ainsi, lorsque lesdites têtes de préhension sont du type à dépression, à partir d'une source fluidique unique, on peut commander, selon un programme de fonctionnement établi, lesdits moyens de déplacement et les têtes de préhension, ce qui permet d'automatiser totalement le cycle de fabrication des pièces minces depuis leur transfert au dispositif, qui les conforment au profil théorique prédéterminé, jusqu'aux opérations d'usinage et/ou de traitements prévus sur celles-ci, puis leur transfert, par exemple, à un autre poste de travail.

Dans un mode préféré de réalisation, pour chacun desdits vérins, le cylindre est fixé audit support réglable et le piston comporte une tige, susceptible de coulisser avec étanchéité dans le cylindre par l'une de ses extrémités conformée en piston et liée par son autre extrémité à ladite tête de préhension.

On remarque donc la simplicité de réalisation et la fiabilité de fonctionnement à l'usage desdits moyens de déplacement, ce qui permet ainsi de les adapter aisément aux dispositifs antérieurs sans nécessiter des investissements importants.

Aussi, ladite source fluidique commune est susceptible d'engendrer une pression d'air ou analogue dans lesdits vérins pour provoquer le déplacement des têtes de préhension portées par les tiges des vérins dans la position sortie, puis maintenir la pièce mince contre les têtes de préhension et ramener les tiges des vérins dans la position rentrée, en conformant ainsi le profil réel de la pièce mince à son profil théorique prédéterminé.

Par ailleurs, le ressort de compression est avantageusement prévu entre le fond du cylindre et la tige coulissante de chaque vérin. Ainsi, on est sûr que la pièce mince est au contact de toutes les têtes de préhension, lesquelles épousent, à cet instant, le profil réel de la pièce. Par le vide partiel créé dans chacune des têtes, celles-ci maintiennent fermement la pièce, puis sont entraînées par les vérins jusqu'à la position rentrée des tiges, correspondant alors au profil théorique prédéterminé.

Dans un exemple préféré de réalisation, la tête de préhension, portée par chacun desdits moyens de déplacement commandables, se compose :
- d'une embase, liée auxdits moyens de déplacement commandables et présentant une surface externe approximativement hémisphérique pourvue au voisinage de sa périphérie d'un joint torique ;
- d'une cuvette orientable hémisphérique reposant sur ledit joint torique de l'embase et délimitant avec la surface externe de l'embase une chambre en forme de calotte ; et,
- d'une platine fixée à la cuvette hémisphérique dans son plan diamétral et comportant sur sa face externe un joint contre lequel est susceptible de s'appliquer ladite pièce mince.

Avantageusement, la face externe de chaque platine est munie d'une pluralité de billes déterminant un plan de référence du positionnement de ladite pièce mince et assurant le glissement relatif entre la pièce mince et la cuvette de chaque tête de préhension. L'intersection entre l'axe de chaque vérin et le plan de référence de la cuvette correspondante définit un point du profil théorique prédéterminé de la pièce mince.

De plus, chaque embase est pourvue d'un passage susceptible de mettre en communication la chambre en forme de calotte et la conduite issue de la source fluidique, par l'intermédiaire d'un organe fluidique se composant d'un limiteur de débit et d'un clapet anti-retour montés en parallèle sur ladite conduite, et ladite cuvette comporte une canalisation susceptible de mettre en communication, par l'intermédiaire d'un clapet commandable, la chambre en forme de calotte avec l'espace délimité par la face externe de ladite platine et le joint contre lequel est susceptible de s'appliquer ladite pièce mince.

Pour cela, un contacteur à bille amovible est monté sur la face externe de chaque platine, ledit contacteur étant susceptible d'agir sur le clapet commandable fixé à la platine, lorsque la pièce mince est au contact du joint, de façon que le vide partie! s'établisse dans ledit espace via la canalisation.

De plus, un limiteur de débit est prévu sur la conduite reliant chacun desdits moyens de déplacement commandables à ladite source fluidique. De la sorte, le vide partiel délivré par la source fluidique s'installe progressivement dans lesdits vérins, en entraînant les tiges vers leur position rentrée.

Les figures du dessin annéxé feront bien comprendre comment l'invention peut être réalisée. Sur ces figures, des références identiques désignent des éléments semblables.

La figure 1 représente, en coupe axiale partielle, un des supports réglables du dispositif, équipé d'une tête de préhension orientable et pourvue, selon l'invention, des moyens de déplacement commandables, ces derniers étant dans la position rentrée.

La figure 2 est une vue analogue à la précédente, pour laquelle lesdits moyens de déplacement commandables sont dans la position sortie.

Les figures 3A, 3B, 3C et 3D illustrent schématiquement le fonctionnement du dispositif selon l'invention permettant de maintenir et de conformer une pièce mince à un profil théorique prédéterminé.

Le dispositif selon l'invention est destiné à conformer et à maintenir des pièces minces de grandes dimensions, qui présentent généralement une surface courbe, à un profil théorique prédéterminé pour y effectuer, par la suite, différentes opérations d'usinage et/ou de traitements et contrôles spécifiques.

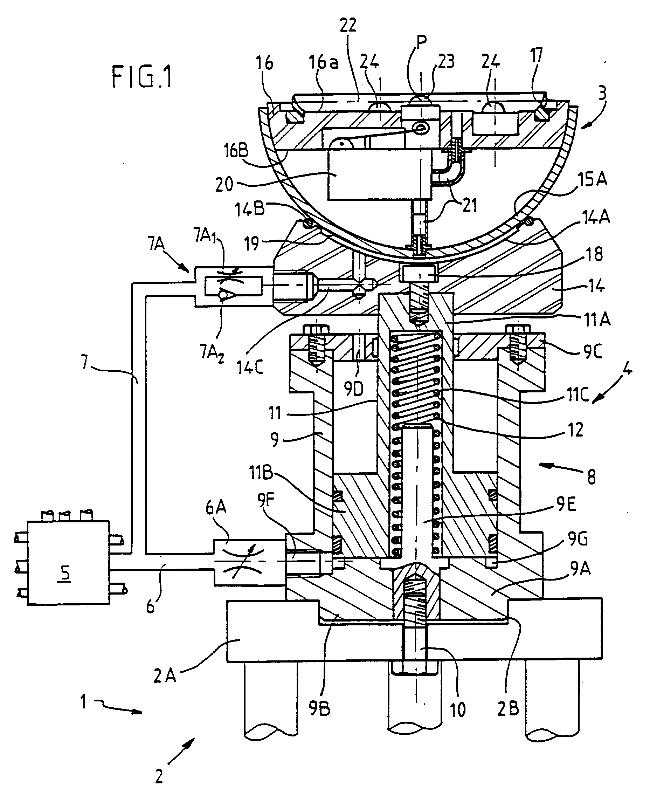

Pour cela, le dispositif 1 comprend une pluralité de supports réglables 2, dont un est représenté partiellement sur la figure 1. Ces supports réglables 2 peuvent être, de façon connue, les plateformes mobiles de vérins d'outillage flexible et chacun d'eux est pourvu d'une tête de préhension orientable 3, du type à dépression.

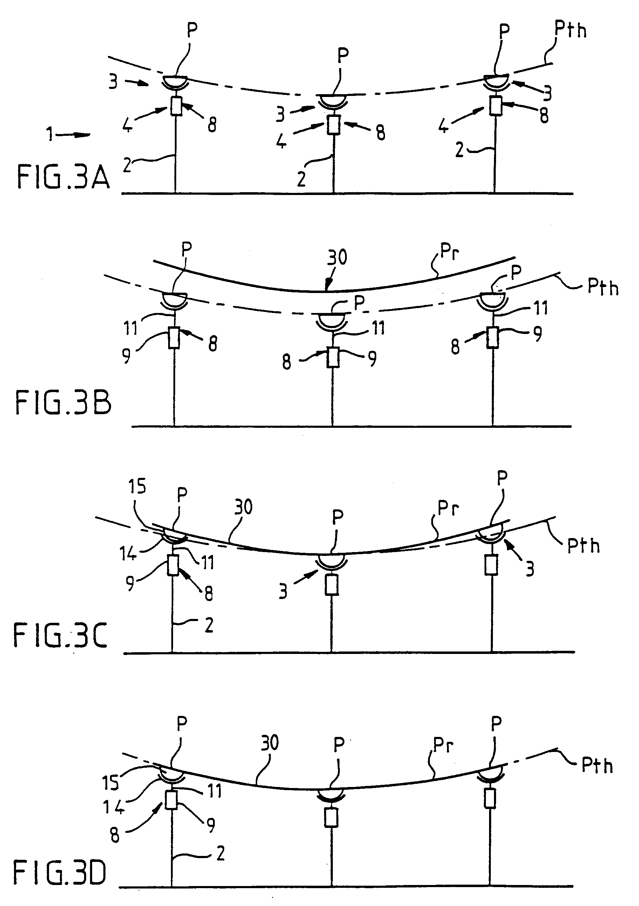

Selon l'invention, il est prévu, entre chaque support 2 et la tête de préhension correspondante 3, des moyens de déplacement commandables 4 dont le but est de supprimer les écarts dimensionnels pouvant apparaître entre le profil réel de la pièce mince et le profil théorique prédéterminé pour les raisons évoquées préalablement. Pour cela, lesdits moyens de déplacement commandables 4 sont susceptibles d'amener, par l'intermédiaire des têtes de préhension, la pièce mince de profil réel à son profil théorique, comme on le verra en regard des figures 3A à 3D.

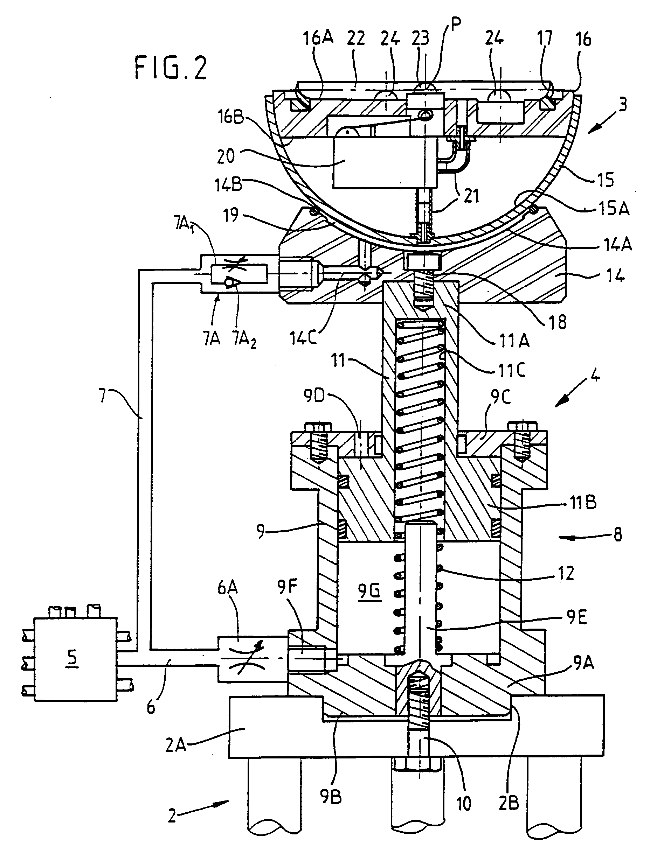

Les moyens 4 sont alors susceptibles de se déplacer entre deux positions extrêmes respectivement rentrée (figure 1) et sortie (figure 2), dont la course correspond aux écarts dimensionnels admissibles, susceptibles d'apparaître entre le profil réel et le profil théorique prédéterminé des pièces minces. Ces moyens de déplacement commandables 4, associés à chaque support réglable 2, sont du type fluidique et ils sont reliés à une source fluidique commune d'alimentation 5 par une conduite 6, à cette source fluidique commune 5 étant également reliée les têtes de préhension 3 par des conduites respectives 7.

Sur les figures 1 et 2, les moyens de déplacement commandables 4 sont structurellement définis, dans cet exemple de réalisation, par un vérin pneumatique 8, qui se compose d'un cylindre 9, fixé par son fond 9A à la partie supérieure 2A du support 2 au moyen d'une vis 10, et d'une tige 11, solidarisée par son extrémité libre 11A à la tête de préhension 3 et susceptible de coulisser avec étanchéité dans le cylindre 9 par son autre extrémité 11B conformée en piston.

Pour assurer le centrage de chaque vérin pneumatique 8 par rapport au support 2, un épaulement annulaire 9B, prolongeant extérieurement le fond 9A du cylindre, s'engage dans un évidement correspondant 2B prévu dans la partie supérieure 2A du support réglable 2.

Par ailleurs, une culasse 9C obture le cylindre 9 du côté opposé à son fond, et présente un trou débouchant 9D faisant office de mise à l'air libre. La tige 11 traverse la culasse 9C. La conduite 6, reliant chacun des vérins 8 à la source fluidique 5, est raccordée, à une de ses extrémités au voisinage du fond 9A du cylindre par l'intermédiaire d'un passage 9F, un limiteur de débit 6A étant de plus monté sur la conduite 6 à son extrémité raccordée au cylindre.

Aussi, il est prévu un ressort de compression 12 logé entre le fond 9A du cylindre 9 et la tige déplaçable 11 de chaque vérin. Ce ressort 12, disposé coaxialement à l'axe du vérin, est maintenu en position par une saillie circulaire 9E prolongeant intérieurement le fond du cylindre et par un trou borgne 11C coaxial à la saillie 9E et ménagé dans la tige 11. De plus, le tarage de chaque resort 12 est tel qu'il s'oppose juste au poids de la tige et de la tête de préhension.

Sur la figure 1, comme on le verra ultérieurement, la tige 11 du vérin est en position rentrée, comprimant ainsi le ressort, grâce à un vide partiel délivré dans la chambre 9G du cylindre par la source 5. Sur la figure 2, une pression d'air est appliquée par la source 5 dans la chambre 9G de chaque vérin, de sorte que la tige 11 se trouve dans une position extrême sortie.

Quant à la tête de préhension orientable 3, du type à dépression, portée par chaque vérin pneumatique 8, elle comprend, dans cet exemple de réalisation, une embase 14, une cuvette orientable 15 et une platine 16 pourvue d'un joint à lèvre 17, contre lequel est susceptible de s'appliquer la pièce mince.

L'embase 14 est fixée à l'extrémité 11A de la tige 11 du vérin 8 par une vis 18 et elle présente une surface externe 14A approximativement hémisphérique pourvue au voisinage de sa périphérie d'un joint torique 14B. La cuvette 15 présente une forme hémisphérique et elle vient au contact du joint torique 14B de l'embase 14. Ainsi, une chambre 19 en forme de calotte est délimitée par la surface ex terne 14A de l'embase et la paroi correspondante 15A de la cuvette 15. La platine 16 est fixée à la cuvette 15, approximativement dans son plan diamétral, et elle comporte, sur sa face externe 16A, le joint à lèvre circulaire 17 disposé au voisinage de sa périphérie.

Par ailleurs, en se référant à ces figures 1 et 2, on voit que la conduite 7 est raccordée, par l'intermédiaire d'un organe fluidique 7A, se composant d'un limiteur de débit 7A1 et d'un clapet anti-retour 7A2 montés en parallèle, à un passage 14C ménagé dans l'embase 14, en étant susceptible ainsi de mettre en communication la chambre 19 avec la source fluidique 5. Aussi, il est fixé à la face interne 16B de la platine 16, tournée vers l'intérieur de la cuvette hémisphérique 15, un clapet commandable 20 susceptible de mettre en communication, par l'intermédiaire d'une canalisation 21, raccordée à ses extrémités à la paroi 15A de la cuvette 15 et à la face ex terne 16A de la platine, la chambre 19 et l'espace 22 délimité par la face ex terne 16A et le joint 17. Pour cela, un contacteur à bille amovible 23 est susceptible de commander ledit clapet, et il est monté dans la platine 16, dans l'axe du vérin 8.

Par ailleurs, chaque tête de préhension 3 est munie de trois billes 24 disposées à 120° les unes des autres, dont deux sont visibles sur les figures 1 et 2. Les trois billes 24, logées dans la platine 16 font saillie de la face externe 16A de celle-ci en définissant un plan de référence pour la pièce mince et en assurant le glissement relatif latéral entre la pièce mince et la cuvette.

Le plan de référence, défini par les trois billes 24, détermine avec l'axe du vérin 8 un point géométrique P, l'ensemble desdits points géométriques P des vérins coïncidant avec le profil théorique prédéterminé de la pièce mince. Chaque cuvette 15 est donc susceptible de s'orienter vis-à-vis de l'embase fixe 14 autour de ce point P.

Le fonctionnement du dispositif selon l'invention sera maintenant décrit en référence aux figures 3A,3B,3C et 3D, qui représentent schématiquement trois des supports réglables du dispositif 1, disposés dans un plan transversal quelconque.

Sur la figure 3A, les supports 2 sont préalablement réglés en hauteur pour que les points géométriques P, définis par l'intersection des axes des vérins pneumatiques 8 et des plans de référence desdites billes 24, correspondent au profil théorique prédéterminé que doit avoir la pièce mince Ce profil théorique Pth, obtenu en joignant l'ensemble des points P, est illustré en traits mixtes. Le réglage en hauteur desdits supports réglables s'effectue lorsque les vérins pneumatiques 8 sont en position rentrée, telle que représentée sur la figure 1. Ainsi, les pistons 11B des tiges sont au contact respectivement des fonds 9A des cylindres, les chambres 9G ayant un volume minimal.

La source fluidique 5 est alors commandée pour engendrer de l'air sous pression dans les conduites 6 et 7. L'air sous pression débouche par le passage 9F dans les chambres 9G des cylindres 9 et pousse chacune des tiges 11 jusqu'à ce que leur piston vienne en butée contre les culasses 9C. L'air ambiant, contenu entre les pistons et les culasses des vérins, est chassé vers l'extérieur par les trous 9D. Les chambres 9G présentent alors un volume maximal. Simultanément, l'air sous pression traverse dans ce cas le limiteur de débit 7A1 de chaque vérin (le clapet anti-retour 7A2 empêchant le passage de l'air) et traverse le passage 14C ménagé dans chacune des embases 14 pour arriver dans la chambre 19 des têtes de préhension 3. L'air, ayant traversé les limiteurs de débit, soulève alors légèrement chacune des cuvettes orientables 15 en facilitant leur glissaient sur le joint torique 14B des embases. Par ailleurs, l'air contenu dans chaque chambre 19 pénètre dans la canalisation 21 pour être bloqué par chaque clapet commandable 20, dont la position est fermée.

A ce moment, le dispositif 1 occupe la position représentée sur la figure 3B pour laquelle les vérins 8 sont dans une position extrême sortie, chaque point du profil théorique Pth ayant été translaté d'une distance correspondant à la course identique des vérins pneumatiques 8.

La pièce mince 30, maintenue par des moyens appropriés non représentés, est alors amenée en regard des têtes de préhension 3, puis posée sur celles-ci. On voit, sur cet exemple, que le profil réel Pr de la pièce mince 30 ne correspond pas au profil théorique Pth prédéterminé, de sorte qu'elle n'est pas au contact, dans cet exemple de représentation, des deux têtes de préhension externes.

Pour provoquer le contact de la pièce mince 30 avec toutes les têtes de préhension 3 du dispositif 1, l'alimentation en air sous pression est coupée et le circuit mis à l'air libre (pression atmosphérique). Comme le tarage de chaque ressort 9E s'oppose juste au poids de la tige et de la tête de préhension qu'il supporte, les têtes de préhension 3, qui sont déjà en contact avec la pièce mince 30, descendent plus ou moins sous le poids de la pièce (par l'intermédiaire des tiges qui s'enfoncent dans les cylindres desdits vérins) et ce, jusqu'à ce que l'ensemble des têtes de préhension 3 soit au contact de la pièce 30. L'agencement de tels ressorts permet ainsi de mettre en contact la pièce mince avec la totalité des têtes de préhension, comme le montre la figure 3C. A cet instant, les points P des cuvettes 15, qui se sont orientées automatiquement par rapport à leurs embases fixes 14 respectives, correspondent au profil réel de la pièce mince 30. Dans cet exemple, on voit donc les écarts dimensionnels existant entre le profil réel de la pièce et le profil théorique prédéterminé, au niveau des vérins externes 8.

Pour amener et maintenir la pièce mince 30 à son profil théorique prédéterminé Pth, la source fluidique 5 délivre alors un vide partiel ou une dépression dans les conduites 6 et 7. Cela a pour effet d'ouvrir les clapets anti-retour 7A2 et de créer le vide partiel dans les chambres 19 en assurant ainsi une liaison par succion entre chaque cuvette orientée 15 et son embase 14 pourvue du joint 14B.

La pièce mince 30, en appui sur les billes 24 de chaque platine, vient enfoncer le contacteur à bille 23 qui commande à son tour l'ouverture du clapet 20. De la sorte, la dépression s'installe dans la canalisation 21 puis dans l'espace 22 délimité entre la zone correspondante de la pièce, le joint souple 17 et la face ex terne 16A des platines 16. La pièce 30 est alors fermement maintenue par succion contre les têtes de préhension 3. Grâce au limiteur de débit 6A, la dépression s'installe progressivement et avec un léger retard dans la chambre 9G de chaque vérin 8. Cela a pour conséquence d'amener lentement les tiges 11 portant les têtes de préhension dans la position rentrée, représentée sur la figure 1, et de conformer ainsi la pièce mince 30 au profil théorique prédéterminé comme le montre la figure 3D.

A ce stade, les opérations d'usinage peuvent alors être effectuées sur la pièce mince, et lorsque celles-ci sont réalisées, la source fluidique est commandée de façon à rompre le vide partiel dans les vérins et les têtes de préhension. L'air sous pression est à nouveau adressée par la source 5 amenant alors le dispositif 1 à sa configuration représentée sur la figure 3B. Entre temps, la pièce mince est transférée par exemple vers un autre poste de travail.

Un nouveau cycle de fonctionnement du dispositif peut alors commencer.

Bien que ci-dessus on ait décrit des têtes de préhension à dépression, il va de soi que l'on pourrait utiliser des têtes de préhension de type différent, par exemple électromagnétiques.

## Revendications

1. Procédé pour conformer et maintenir des pièces minces, de grandes dimensions, à un profil théorique (Pth) prédéterminé, du type dans lequel on utilise une pluralité de supports réglables (2) équipés respectivement, à une de leurs extrémités, de têtes de préhension orientables (3), et des moyens de déplacement (4) prévus entre chaque tête de préhension (3) et son support (2), ledit procédé consistant à :
- régler lesdits supports (2) pour amener lesdites têtes de préhension (3) au profit théorique prédéterminé (Pth), alors que lesdits moyens de déplacement (4) occupent une position rentrée ;
- commander lesdits moyens de déplacement (4) jusqu'à une position sortie, translatant ainsi ledit profil théorique (Pth) ;
- disposer ladite pièce mince sur lesdites têtes de préhension (3) avec certaines desquelles ladite pièce entre en contact ;
- agir sur lesdits moyens de déplacement (4) pour permettre à toutes lesdites têtes de préhension (3) d'être au contact de ladite pièce, en épousant son profil réel (Pr) ;
- maintenir ladite pièce contre les têtes de préhension (3) ; puis,
- abaisser lesdits moyens de déplacement (4) jusqu'à leur position rentrée, pour conformer et amener ladite pièce mince de son profil réel (Pr) au profil théorique (Pth) prédéterminé correspondant à la position rentrée desdits moyens de déplacement (4).

2. Dispositif (1) pour la mise en oeuvre du procédé selon la revendication 1, du type comportant une pluralité de supports (2) réglables équipés respectivement, à une de leurs extrémités, de têtes de préhension orientables (3) du type à dépression, contre lesquelles est susceptible de s'appliquer ladite pièce mince, et des moyens de déplacement (4) portant chacune desdites têtes de préhension (3) et liés respectivement auxdits supports (2), lesdits moyens de déplacement (4) étant commandables et étant chacun constitués par un vérin (8) à cylindre (9) et piston (11, 11A, 11B),
caractérisé en ce que :
- lesdits moyens de déplacement (4) sont susceptibles de se déplacer entre deux positions, respectivement rentrée et sortie, dont la course correspond aux écarts dimensionnels admissibles susceptibles d'apparaître entre le profil réel (Pr) de ladite pièce mince et le profil théorique (Pth) predéterminé, ce dernier étant défini lorsque lesdits moyens de déplacement commandables (4) occupent la position rentrée ;
- un ressort de compression (12) est prévu entre ledit cylindre (9) et le piston (11, 11A, 11B) de chaque vérin (8) ; et
- le tarage de chaque ressort (12) est tel qu'il s'oppose, dans la position sortie desdits moyens de déplacement (4), juste au poids du piston (11, 11A, 11B) et de la tête de préhension (3) qui lui est associée.

3. Dispositif selon la revendication 2,
caractérisé en ce que lesdits vérins (8), disposés entre lesdits supports réglables et les têtes de préhension, sont du type fluidique et sont reliés, par l'intermédiaire de conduites respectives (6), à une source fluidique commune (5), et en ce que chacune des têtes de préhension (3) est reliée, par l'intermédiaire d'une conduite (7), à ladite source fluidique.

4. Dispositif selon la revendication 3,
caractérisé en ce que, pour chacun desdits vérins (8), le cylindre (9) est fixé audit support réglable (2) et le piston comporte une tige (11), susceptible de coulisser avec étanchéité dans le cylindre par l'une de ses extrémités conformée en piston (11B) et liée par son autre extrémité (11A) à ladite tête de préhension (3).

5. Dispositif selon les revendications 3 et 4,
caractérisé en ce que ladite source fluidique commune (5) est susceptible d'engendrer une pression d'air ou analogue dans lesdits vérins (8) pour provoquer le déplacement des têtes de préhension (3) portées par les tiges (11) des vérins (8) dans la position sortie, puis maintenir la pièce mince (30) contre les têtes de préhension (3) et ramener les tiges des vérins dans la position rentrée, en conformant ainsi le profil réel de la pièce mince à son profil théorique prédéterminé.

6. Dispositif selon l'une des revendications 4 ou 5,
caractérisé en ce que le ressort de compression (12) est prévu entre le fond (9A) du cylindre (9) et la tige coulissante (11) de chaque vérin (8).

7. Dispositif selon l'une quelconque des revendications précédentes 2 à 6,
caractérisé en ce que la tête de préhension (3), portée par chacun desdits moyens de déplacement commandables, se compose :
- d'une embase (14), liée auxdits moyens de déplacement commandables (4) et présentant une surface externe (14A) approximativement hémisphérique pourvue au voisinage de sa périphérie d'un joint torique (14B) ;
- d'une cuvette orientable hémisphérique (15) reposant sur ledit joint torique (14B) de l'embase (14) et délimitant avec la surface externe (14A) de l'embase une chambre (19) en forme de calotte ; et,
- d'une platine (16) fixée à la cuvette hémisphérique (15) dans son plan diamétral et comportant, sur sa face externe (16A), un joint (17) contre lequel est susceptible de s'appliquer ladite pièce mince (30).

8. Dispositif selon la revendication 7,
caractérisé en ce que la face externe (16A) de chaque platine (16) est munie d'une pluralité de billes (24) déterminant un plan de référence du positionnement de ladite pièce mince et assurant le glissament relatif entre la pièce mince et la cuvette de chaque tête de préhension.

9. Dispositif selon l'une des revendications 7 ou 8 ,
caractérisé en ce que chaque embase (14) est pourvue d'un passage (14C) susceptible de mettre en communication la chambre en forme de calotte (19) et la conduite (7) issue de la source fluidique (5), par l'intermédiaire d'un organe fluidique (7A) se composant d'un limiteur de débit (7A1) et d'un clapet anti-retour (7A2) montés en parallèle sur ladite conduite, et en ce que ladite cuvette (15) comporte une canalisation (21) susceptible de mettre en communication, par l'intermédiaire d'un clapet commandable (20), la chambre en forme de calotte (19) avec l'espace (22) délimité par la face externe (16A) de ladite platine (16) et le joint (17) contre lequel est susceptible de s'appliquer ladite pièce mince.

10. Dispositif selon la revendication 9,
caractérisé en ce qu'un contacteur à bille amovible (23) est monté sur la face externe (16A) de chaque platine, ledit contacteur étant susceptible d'agir sur le clapet commandable fixé à la platine, lorsque la pièce mince est au contact du joint, de façon que le vide partiel s'établisse dans ledit espace (22) via la canalisation (21).

11. Dispositif selon l'une des revendications 3 à 9,
caractérisé en ce qu'un limiteur de débit (6A) est prévu sur la conduite (6) reliant chacun desdits moyens de déplacement commandables (4) à ladite source fluidique (5).

## Claims

1. Method for shaping and holding thin workpieces of large dimensions to a predetermined theoretical profile (Pth), of the type in which use is made of a plurality of adjustable supports (2) equipped respectively, at one of their ends, with orientable gripper heads (3), and with movement means (4) being provided between each gripper head (3) and its support (2), the said method consisting in:
- adjusting the said supports (2) so as to bring the said gripper heads (3) to the predetermined theoretical profile while the said movement means (4) occupy a retracted position;
- controlling the said movement means (4) as far as an extended position, thus translating the said theoretical profile (Pth);
- locating the said thin workpiece on the said gripper heads (3) with some of which the said workpiece comes into contact;
- acting upon the said movement means (4) so as to allow all the said gripper heads (3) to be in contact with the said workpiece, matching its actual profile (Pr);
- holding the said workpiece against the gripper heads (3); then
- lowering the said movement means (4) as far as their retracted position, so as to shape and to bring the said thin workpiece from its actual profile (Pr) to the predetermined theoretical profile (Pth) corresponding to the retracted position of the said movement means (4).

2. Device (1) for the implementation of the method according to Claim 1, of the type including a plurality of adjustable supports (2) equipped respectively, at one of their ends, with orientable gripper heads (3) of the suction type, against which the said thin workpiece can rest, and movement means (4) bearing each of the said gripper heads (3) and connected respectively to the said supports (2), the said movement means (4) being controllable and each consisting of a ram (8) having a cylinder (9) and a piston (11, 11A, 11B),
characterized in that:
- the said movement means (4) can move between two positions: a retracted position and an extended position respectively, the travel for which corresponds to the permissible dimensional discrepancies likely to be encountered between the actual profile (Pr) of the said thin workpiece and the predetermined theoretical profile (Pth), the latter being defined when the said controllable movement means (4) occupy the retracted position;
- a compression spring (12) is provided between the said cylinder (9) and the piston (11, 11A, 11B) of each ram (8); and
- the rating of each spring (12) is such that when the said movement means (4) are in the extended position, it exactly opposes the weight of the piston (11, 11A, 11B) and of the gripper head (3) associated with it.

3. Device according to Claim 2, characterized in that the said rams (8), which are located between the said adjustable supports and the said gripper heads, are of the fluid type and are connected, via respective pipes (6) to a common fluid source (5), and in that each of the gripper heads (3) is connected to the said fluid source via a pipe (7).

4. Device according to Claim 3, characterized in that, for each of the said rams (8), the cylinder (9) is fixed to the said adjustable support (2) and the piston has a rod (11) capable of sliding with sealing in the cylinder via one of its ends which is shaped as a piston (11B), the rod being connected via its other end (11A) to the said gripper head (3).

5. Device according to Claims 3 and 4, characterized in that the said common fluid source (5) is capable of generating an air pressure or the like in the said rams (8) so as to bring about the movement of the gripper heads (3) borne by the rods (11) of the rams (8) into the extended position, then keep the thin workpiece (30) against the gripper heads (3) and return the rods of the rams to the retracted position, thus shaping the actual profile of the thin workpiece to its predetermined theoretical profile.

6. Device according to one of Claims 4 and 5, characterized in that the compression spring (12) is provided between the blind end (9A) of the cylinder (9) and the sliding rod (11) of each ram (8).

7. Device according to any one of the preceding Claims 2 to 6, characterized in that the gripper head (3) borne by each of the said controllable movement means is composed:
- of a base (14) connected to the said controllable movement means (4) and exhibiting an approximately hemispherical external surface (14A) provided with an O-ring (14B) close to its periphery;
- of a hemispherical orientable bowl (15) resting on the said O-ring (14B) of the base (14) and delimiting, with the external surface (14A) of the base, a chamber (19) in the shape of a cap; and,
- of a plate (16) fixed to the hemispherical bowl (15) in its diametral plane and including, on its external face (16A), a seal (17) against which the said thin workpiece (30) can rest.

8. Device according to Claim 7, characterized in that the external face (16A) of each plate (16) is equipped with a plurality of balls (24) determining a reference plane for the positioning of the said thin workpiece and ensuring relative slipping between the thin workpiece and the bowl of each gripper head.

9. Device according to one of Claims 7 and 8, characterized in that each base (14) is provided with a passage (14C) capable of placing the cap-shaped chamber (19) in communication with the pipe (7) coming from the fluid source (5), via a fluid member (7A) composed of a flow limiter (7A1) and of a non-return valve (7A2) mounted in parallel on the said pipe, and in that the said bowl (15) includes a duct (21) capable of placing, by means of a controllable valve (20), the cap-shaped chamber (19) in communication with the space (22) delimited by the external face (16A) of the said plate (16) and the seal (17) against which the said thin workpiece is able to rest.

10. Device according to Claim 9, characterized in that a removable ball contact (23) is mounted on the external face (16A) of each plate, the said contact being capable of acting on the controllable valve fixed to the plate, when the thin workpiece is in contact with the seal, so that a partial vacuum is set up in the said space (22) via the duct (21).

11. Device according to one of Claims 3 to 9, characterized in that a flow limiter (6A) is provided on the pipe (6) connecting each of the said controllable movement means (4) to the said fluid source (5).

## Patentansprüche

1. Verfahren, mit dem großflächige dünne Werkstücke an ein vorbestimmtes theoretisches Profil (Pth) angepaßt und in dieser Lage gehalten werden können, derart, daß eine Vielzahl einstellbarer Stützen (2), die jeweils an einem ihrer Enden mit schwenkbaren Greifköpfen (3) ausgerüstet sind, und Verstellmittel (4) zwischen jedem Greifkopf (3) und seiner Stütze (2) eingesetzt werden, wobei das Verfahren darin besteht, daß:
- die Stützen (2) so eingestellt werden, daß die Greifköpfe (3) auf das vorbestimmte theoretische Profil (Pth) gebracht werden, wenn sich die Verstellmittel (4) in eingefahrener Stellung befinden;
- die Verstellmittel (4) in eine ausgefahrene Stellung gesteuert werden, so daß das theoretische Profil (Pth) verschoben wird;
- das dünne Werkstück auf den Greifköpfen (3) angeordnet wird und auf einigen davon aufliegt;
- die Verstellmittel (4) betätigt werden, so daß alle Greifköpfe (3) am Werkstück anliegen und dessen tatsächliches Profil (Pr) annehmen;
- das Werkstück an die Greifköpfe (3) angelegt gehalten wird; dann
- die Verstellmittel (4) in ihre eingefahrene Stellung abgesenkt werden, so daß das dünne Werkstück vom tatsächlichen Profil (Pr) an das vorbestimmte theoretische Profil (Pth), das der eingefahrenen Stellung der Verstellmittel (4) entspricht, angepaßt und in dieser Stellung gehalten wird.

2. Vorrichtung (1) zur Anwendung des Verfahrens nach Anspruch 1, derart, daß diese eine Vielzahl von einstellbaren Stützen (2), die jeweils an einem Ende mit schwenkbaren Greifköpfen (3) des Unterdruck-Typs ausgerüstet sind, an die sich das dünne Werkstück anlegen kann, und Verstellmittel (4) hat, auf denen sich je ein Greifkopf (3) befindet und die jeweils mit den Stützen (2) verbunden sind, wobei die Verstellmittel (4) gesteuert werden können und jeweils aus einem Arbeitszylinder (8) mit Zylinder (9) und Kolben (11,11A,11B) bestehen,
dadurch gekennzeichnet, daß
- sich die Verstellmittel (4) zwischen zwei Stellungen, einer eingefahrenen bzw. einer ausgefahrenen Stellung, bewegen können, und deren Hub den zulässigen Maßabweichungen zwischen dem tatsächlichen Profil (Pr) des dünnen Werkstücks und dem vorbestimmten theoretischen Profil (Pth), das bei eingefahrener Stellung der steuerbaren Verstellmittel (4) definiert wird, entspricht;
- eine Druckfeder (12) zwischen dem Zylinder (9) und dem Kolben (11,11A,11B) jedes Arbeitszylinders (8) vorgesehen ist; und
- jede Feder (12) so eingestellt ist, daß sie in der ausgefahrenen Stellung der Verstellmittel (4) genau dem Gewicht von Kolben (11,11A,11B) und zugeordnetem Greifkopf (3) entgegenwirkt.

3. Vorrichtung nach Anspruch 2,
dadurch gekennzeichnet, daß die Arbeitszylinder (8) zwischen den einstellbaren Stützen und den Greifköpfen mit einem Fluid als Kraftübertragungsmittel arbeiten und über entsprechende Leitungen (6) mit einer gemeinsamen Fluidquelle (5) verbunden sind, und dadurch, daß jeder Greifkopf (3) über eine Leitung (7) mit der Fluidquelle verbunden ist.

4. Vorrichtung nach Anspruch 3,
dadurch gekennzeichnet, daß bei jedem Arbeitszylinder (8) der Zylinder (9) an der einstellbaren Stütze (2) befestigt ist und der Kolben eine Stange (11) hat, die mit einem als Kolben (11B) ausgebildeten Ende dicht im Zylinder gleiten kann und mit ihrem anderen Ende (11A) mit dem Greifkopf (3) verbunden ist.

5. Vorrichtung nach Anspruch 3 und 4,
dadurch gekennzeichnet, daß die gemeinsame Fluidquelle (5) in den Arbeitszylindern (8) einen Luftdruck oder ähnliches erzeugen und die Verschiebung der Greifköpfe (3) auf den Stangen (11) der Arbeitszylinder (8) in die ausgefahrene Stellung bewirken, dann das dünne Werkstück (30) an die Greifköpfe (3) angelegt halten und die Stangen der Arbeitszylinder in die eingefahrene Stellung versetzen kann, so daß das tatsächliche Profil des dünnen Werkstücks an dessen vorbestimmtes theoretisches Profil angepaßt wird.

6. Vorrichtung nach einem der Ansprüche 4 oder 5,
dadurch gekennzeichnet, daß die Druckfeder (12) zwischen dem Boden (9A) von Zylinder (9) und der Gleitstange (11) jedes Arbeitszylinders (8) vorgesehen ist.

7. Vorrichtung nach einem der obigen Ansprüche 2 bis 6,
dadurch gekennzeichnet, daß der Greifkopf (3) auf jedem der steuerbaren Verstellmittel aus:
- einem Fuß (14), der mit den steuerbaren Verstellmitteln (4) verbunden ist und eine annähernd halbkugelförmige Außenfläche (14A) mit einem Runddichtring (14B) in der Nähe ihres Umfangs hat;
- einer schwenkbaren halbkugelförmigen Schale (15), die auf dem Runddichtring (14B) von Fuß (14) aufliegt und mit der Außenfläche (14A) des Fußes eine Kammer (19) in Form einer Kalotte bildet; und
- einer Platte (16), die an der halbkugelförmigen Schale (15) in deren diametraler Ebene befestigt ist und an ihrer Außenseite (16A) eine Dichtung (17) hat, an die sich das dünne Werkstück (30) anlegen kann,
besteht.

8. Vorrichtung nach Anspruch 7,
dadurch gekennzeichnet, daß die Außenseite (16A) jeder Platte (16) eine Vielzahl von Kugeln (24) hat, die eine Bezugsebene für die Positionierung des dünnen Werkstücks bilden und das relative Gleiten zwischen dem dünnen Werkstück und der Schale jedes Greifkopfes gewährleisten.

9. Vorrichtung nach einem der Ansprüche 7 oder 8,
dadurch gekennzeichnet, daß jeder Fuß (14) mit einer Durchführung (14C) versehen ist, die die kalottenförmige Kammer (19) und die Leitung (7) aus der Fluidquelle (5) über ein Fluidorgan (7A), das aus einem Durchsatzbegrenzer (7A1) und einer parallel dazu angeordneten Rückschlagklappe (7A2) in der Leitung besteht, miteinander verbinden kann, und dadurch, daß die Schale (15) eine Leitung (21) hat, durch die die kalottenförmige Kammer (19) über eine steuerbare Klappe (20) mit dem Raum (22) verbunden werden kann, der durch die Außenseite (16A) von Platte (16) und die Dichtung (17) gebildet wird, an die sich das dünne Werkstück anlegen kann.

10. Vorrichtung nach Anspruch 9,
dadurch gekennzeichnet, daß an der Außenseite (16A) jeder Platte ein Wechselkugelschalter (23) angebracht ist, der die an der Platte befestigte steuerbare Klappe betätigen kann, wenn das dünne Werkstück an der Dichtung anliegt, so daß sich im Raum (22) über die Leitung (21) das Teilvakuum einstellt.

11. Vorrichtung nach einem der Ansprüche 3 bis 9,
dadurch gekennzeichnet, daß in der Leitung (6) zwischen jedem steuerbaren Verstellmittel (4) und der Fluidquelle (5) ein Durchsatzbegrenzer (6A) vorgesehen ist.
